# EUROPEAN PATENT SPECIFICATION

(11) **EP 2 763 346 B1**
(45) Date of publication and mention of the grant of the patent: **06.04.2016**
(21) Application number: 11872909.4
(22) Date of filing: 27.09.2011
(51) Int. Cl.: H04L 9/32, H04L 29/06, H04L 9/08

(54) **MUTUAL ANTI-PIRACY AUTHENTICATION SYSTEM IN SMARTPHONE-TYPE SOFTWARE TOKENS AND IN THE SMS THEREOF**
AUTHENTIFIZIERUNGSSYSTEM MIT GEGENSEITIGER KOPIERSCHUTZMARKIERUNG IN SOFTWARE-TOKENS FÜR EIN SMARTPHONE UND IN DAMIT ERZEUGTEN SMS
SYSTÈME D'AUTHENTIFICATION MUTUELLE ANTI-PIRATERIE DANS LES JETONS LOGICIELS DE TYPE SMARTPHONE ET DANS LEUR SMS

(43) Date of publication of application: 06.08.2014
(73) Proprietor: 3OTP Autenticación, S.L., 28006 Madrid (ES)
(72) Inventor: VEGA CRESPO, José, Agustín, Francisco, Javier, E-28250 Torrelodones (Madrid) (ES)
(74) Representative: Carpintero Lopez, Francisco
(86) International application number: PCT/ES2011/070677
(87) International publication number: WO 2013/045716

(56) References cited:
- US-A1- 2007 174 904
- US-A1- 2008 192 933
- US-A1- 2008 192 933
- US-A1- 2011 197 070

## Description

### Field of the Invention

The present invention is comprised within systems for authentication between two parties to perform an operation that is carried out by means of a virtual dialogue.

### Background of the Invention

There are currently many systems for authentication that use smartphones as a device that supports the application that must be used by one of the parties that are authenticated with said system. These smartphones are currently the primary target of new identify theft fraud techniques, such as Phishing, Pharming and Man in the Middle, which use social engineering techniques and a wide range of malware (keyloggers, stealers, ZeuS Man in the Mobile -MitMo-, SpyEye, etc.) which also significantly affect the security of authentication applications that are run in these smartphones. By using these techniques, delinquents can even make a copy of the application that is being used for authentication such that they can later commit fraud by stealing the identity of the smartphone owner.

Recent studies have shown that not only do the security systems being used not reduce identify theft fraud over the Internet, but rather the number of frauds committed each year increases.

According to the latest news, mobile phones are confirmed to be hackers' favorite target. Between January and June 2011 there was a 273% increase in malware in mobile phones with respect to the same period in 2010, whereas global growth of new threats was 16%. These figures can be seen from the latest G Data Security Labs report, which assures that the growth of mobile phone terminals and their deficiencies in terms of security make them the new favorite targets. *"With malware for mobile phones, cybercriminals have found a new business model",* Ralf Benzmüller, Head of G Data Security Labs, explains. *"Unfortunately, we can say that we are witnessing the birth of a new and potentially very lucrative market niche for cybercriminals, and continued growth of mobile malware is expected from now until the end of the year",* he adds.

The following techniques stand out among those used by delinquents to commit fraud:
- Keylogger:
   This is a specific type of software or hardware device which, once installed in a PC or similar device, is responsible for recording the keystrokes to subsequently memorize them in a file or send them over the Internet. It is normally used as *daemon-type* malware, allowing other users to have access to important passwords, such as credit card numbers, or another type of private information that is desired to be obtained. It is said that a virtual keyboard can be used to avoid this, because it only requires clicking on the mouse. However, newer applications also record screenshots when clicking the mouse and they cancel out the security of this measure.

- Phishing:
   This occurs when in a virtual dialogue generally between a company and a client, the delinquent steals the identity of the company so that the client believes that he/she is talking with the corresponding company, and so the client, believing that he/she is talking with the corresponding company, gives the delinquent data used for authentication with respect to said company. The delinquent subsequently uses this data to hold a dialogue with the company, passing him/herself off as the client and thus being able to commit fraud.
- Man in the Middle (MITM)
   This occurs when the delinquent, using the suitable techniques, is able to intercept and modify, when it is considered appropriate to do so, any messages being exchanged generally between a company and its client throughout a virtual dialogue.
- Zeus Mitmo: Man in the Mobile
   This is applied in those cases in which the authentication solution is based on sending an SMS to the client's mobile phone to inform him/her of the data that the company has received from the client in the corresponding request to run an operation, and also for the client to know the one-time password (OTP) that the client must use to confirm the operation. This is the case of many bank entities which, besides the signature key or code card necessary for authorizing a transfer, use a second authentication phase. This is normally done by means of sending a code by SMS to the client's mobile phone, which must be entered in bank's web page to successfully make the transfer.

Fraud is committed when the delinquent intercepts the SMS that is received by means of a Trojan horse installed in the client's mobile phone and send it to his/her telephone. Therefore, if the delinquent pass him/herself off as the client by means of an MITM or any other combination of techniques and sends an operation request in his/her own benefit to the company, the client is not going to know about it, and furthermore the delinquent will receive the OTP in the intercepted SMS that will be needed to confirm said operation.

It can be asserted that there will be an increasingly greater number of methods for intercepting SMS.

As previously discussed, the presence of smartphones, with the increase in connectivity and information availability, is causing malicious software developers to focus their threats on mobile devices. Therefore, the target of a significant portion of new malware is smartphones, and this can lead to Trojan horses that are capable of:
- detecting the keystroking of a PIN and sending it to a delinquent;
- sending to a third party an entire application with its files;
- intercepting SMS and sending them to the mobile phone of a delinquent.

This gives the impression that from now on, all the methods for authentication that currently use a smartphone, for example, with algorithms for generating an OTP or receiving an OTP in an SMS, are susceptible to being compromised and must be updated to prevent these new fraud techniques.

A wide variety of systems for authentication which use different means and methods for obtaining the authentication of operations between two parties who are having a virtual dialog is already available on the market today.

Thus, there are systems using one or two OTPs. In such systems, however, if an intruder types in the correct OTP by means of repeated attempts, it can compromise the system. Likewise, a user of this system can be subjected to a real-time Phishing/Pharming attack, in which case the fraudulent operation can be completed because if an intruder gets the first OTP and uses it before its validity expires, such intruder may connect to the company, passing him/herself off as the client.

There are also systems using two OTPs and a permanent password. In this case, an intruder can get the client's permanent password by means of prior Phishing/Pharming. In such case, the intruder can carry out a denial-of-service attack as the intruder can repeatedly request access to the system because by doing so, the company's system is forced to reply by sending an OTP, with all the consequences this entails as regards resource consumption.

There are also systems using three OTPs.

In turn, systems using electronic signatures are also vulnerable. Thus, for example, a page loaded under SSL the digital certificate of which comes from a trusted entity (which the browser loads without errors) and where the well-known 'padlock' is seen cannot be considered secure. (Online fraud with digital signature and SSL, in which, without thinking, the user digitally signs the SHA-256 hash function of a file the content of which is not controlled. Technically, by signing the one-way summary of the file with a recognized certificate, what is signed becomes legally valid; June 2009, Security by Default).

Other systems use code card as a single means of authentication. However, in these systems a user subjected to a phishing attack can provide the passwords stored in the corresponding code card. In this case, a Trojan horse can be recording the information that is displayed on the screen or the information that the user types in. Also, one or more passwords of the card can be obtained by means of phishing, and subsequently, based on repeated attempts to operate, the password requested by a bank may finally coincide with the one the delinquent has, and the delinquent can thus commit fraud.

The most important limitation of code card (passwords) use is the small number of values it can provide, making it necessary to re-use these passwords. This is the source of its greater vulnerability.

The confirmation service for confirming an operation by means of SMS also raises problems. After stealing a client's permanent access password to the company's internet portal, it is thus possible for a delinquent to enter the Internet portal and access the client's profile to modify the client's mobile phone number and entering the delinquent's own; or it is also possible that the delinquent intercepts the client's SMS, so fraud is possible.

US2007174904 discloses a one-time password (OTP) server generating a one-time password (M) corresponding to a query and performing an authentication, when the password corresponds with a response password (N). A short message service (SMS) server converts the query into a text message. An OTP terminal e.g. cellular phone, detects the query from the SMS server. A personal communications device e.g. personal computer, transmits the password (N) to the OTP server when the password (N) corresponding to the transmitted query from the OTP server is input.

### Description of the Invention

The invention relates to a system for mutual authentication of an operation according to claim 1. Preferred embodiments of the system are defined in the dependent claims.

The invention relates to a system for mutual authentication of an operation between a first party and a second party based on a dialogue during which said first and second parties exchange a predetermined number of one-time passwords, wherein:
- said first and second parties are identified in a one-to-one manner by means of a first identifier and a second identifier;
- said first and second parties are in communication by means of two or more different communication channels;
- said first party has a first device, a second device hosting a first authentication application and a third device;
- said second party has a central authentication server hosting a second authentication application associated with said first authentication application;
- each of the second and third devices having first and second password tables, respectively, and the central authentication server having a third password table associated, with a one-to-one correspondence, with the first identifier of the first party;
   wherein:
   - said third table has a pre-established number of rows equal to the number of rows of the first and second tables,
   - said third table contains in each row at least all the one-time passwords that are going to be exchanged and used in the system while the operation takes place, said third table being the only table containing all the passwords that are going to be exchanged and used;
   - said first and second tables each have a part of all the one-time passwords that are going to be exchanged and used in the system while the authentication operation takes place, said first and second tables always having all the passwords in one and the same row;
   wherein:
   - the first party obtains a first password to be used in the operation by means of the corresponding second device;
   - the first party sends this first password together with the corresponding first identifier and together with data relating to said operation over a first communication channel to the central authentication server of the second party by means of the corresponding first device;
   - the central authentication server verifies that said first password received coincides with the password contained in the row of the corresponding third table associated with the first identifier that is being used, and if it is correct it sends a message headed by the second identifier, containing a second password, at least a third password and data about the operation over a second communication channel to the first or second devices of the first party, which message is encrypted with a fifth password, said second, third and fifth passwords being located in the same row as said first password in the third table;
   - the first party receives the encrypted message, verifies that the second identifier is correct, and the second device decrypts it with the fifth password contained in the row of the corresponding first table that is to be used, and verifies that the second password received coincides with that of the same row of the corresponding first table; if said second password is correct, the second party is authenticated with respect to the first party, and the second device presents to the first party the data about the operation received in said message so that it can verify said data; if the first party gives the corresponding approval for this data, the second device provides said at least third password received in said message to the first party;
   - by means of the second table contained in the corresponding third device the first party obtains at least a fourth password located in the same row as said at least third password of the corresponding second table;
   - the first party sends said at least fourth password, together with the first identifier and the first password, from the corresponding first device to the central authentication server of the second party; the second party verifies that said at least fourth password received coincides with the password contained in the row of the corresponding third table that is being used; and if it is correct, the central authentication server sends a confirmation to the first device confirming that the operation was successfully performed.

Any of the aforementioned fraud techniques can be invalidated by means of the system for authentication defined above, even when one of the parties uses a mobile phone or smartphone for supporting the first authentication application because:
- It uses one-time passwords (OTPs) such that if they are obtained they cannot be reused.
- Authentication is mutual, and the first party never gives the corresponding final authentication password to the second party before said second party has been authenticated.
- The messages exchanged in the dialogue travel over a communication channel different from the one used to receive the message that is the source of the content thereof, such that the interception and tracking of all the messages making up the dialogue is hindered.
- Authentication and authorization for an operation requires the first party to confirm the data that the second party has received in the corresponding request to run an operation, such that the first party knows exactly what is being authorized.
- The messages that the second party sends to the first party are encrypted with a one-time code, such that even if a delinquent intercepts it, he/she will be unable to interpret or manipulate it.
- The messages that the second party sends to the first party are authenticated with a one-time password (OTP), such that they cannot have been sent by any other persons or parties passing themselves off as the persons or parties that should be the true senders.
- The second device, which is preferably a mobile phone (smartphone) or the like, does not have all the passwords that are exchanged in the authentication process, it being necessary to that end to have a third device, preferably a password card, that complements it and this is what provides the password/passwords that are missing in that second device. This third device does not communicate with any other device that can help malware get in and access the content thereof. Therefore, even if a delinquent copies the authentication application by means of malware introduced in the second device, it will be of no use because the delinquent will be unable to end any authentication operation as the passwords hosted in the third device are missing.

In the system of the invention, party is preferably understood as each of the entities (people or machines) holding a dialog with one another about their interest in one and the same business.

The central authentication server of the second party preferably contains as many third tables as there are different first parties that want to perform authentication operations with the second party, each third table being different for each of these first parties.

The second authentication application hosted in said central authentication server preferably has a row counter indicating the last row of the third table that was used, and wherein said row counter increases by one unit every time the central authentication server sends to the second device of the first party the encrypted message generated as a response to the acceptance of the first password received from the first party as valid.

Similarly, the first authentication application hosted in said second device preferably has a row counter indicating the last row of the first table that was used, and wherein said row counter increases by one unit every time the first authentication application accepts said encrypted message received from the second party as authentic.

A problem may arise during an operation in which the second party sends said encrypted message to the first party, and said encrypted message, for whatever reason, is not processed correctly by the authentication application of the second device. In this case, the first table of the first party is out of sync with the third table of the second party as regards which was the last row of passwords used. That is because when the central authentication server sends the encrypted message, the row counter indicating the rows of the third table that were used increases by one unit, whereas since said encrypted message is not processed correctly, the row counter of the authentication application of the second device indicating the rows of the first table that were used does not increase. For this reason, for the next authentication operation the second party waits to receive from the first party the first password of the next row, whereas since the row counter of the authentication application of the second device indicating the rows of the first table TA1 that were used has not increased, it indicates to the first party to use the first password V1 of the preceding row.

To solve this problem, a preferred embodiment of the system object of the invention includes a synchronization process for synchronizing the row counters of said first and third tables; this synchronization process can be run in response to the central authentication server verifying that the first party requests an authentication operation using a value of the first password corresponding to the row prior to the row indicated by the row counter indicating the rows of the third table that were used.

Said predetermined number of one-time passwords (or OTPs) exchanged between said first and second parties is preferably at least four, the fifth password furthermore being used for encryption.

The first device of the first party is preferably a PC, although it could also be a mobile phone, automatic teller machine, Point of Sale Terminal, or any other device with equivalent capabilities that can request and perform operations in a virtual manner which, as a result, require mutual authentication of the parties involved.

The central authentication server of the second party is preferably a hardware/software device containing an authentication application to act as a central authentication server of the system for the second party. It preferably has the capacity for processing and communicating over one or more communication channels, such that it can exchange information with the first and second devices of the first party and run the operations defined by the system.

The second device of the first party is preferably a device with a capacity for processing and communicating that can exchange information with the central authentication server of the second party over one or more communication channels, automatically or semi-automatically receiving information about the authentication operation previously requested from the first device and the manner in which the operations defined by the system must continue to be run. The second device has an authentication application for managing communications, managing the first table and supporting operations of the system.

The results of the treatments are communicated to the central authentication server or, where appropriate, directly to the first party by other means, preferably for being displayed on a screen of said second device which is preferably a mobile phone.

The third device is preferably a portable device that the first party can easily carry around. It is preferably a password card where the second table is printed. It can also be a token, the purpose of which within the system is to allow the first party to consult the second table stored therein. It is characterized in that it does not have the capacity of communicating with any other device that could help malware get in and access the content thereof.

Said third device can also be a dual-table password card where two second tables are printed, one on each side of the password card.

In this case of a dual-table password card:
- said encrypted message contains at least two third passwords located in the same row as said first password in the third table which are provided by the second device to the first party if the latter is in agreement with the data about the operation also received in said message;
- by means of said second tables the first party obtains at least two fourth passwords each of which is located in the same rows as said at least two third passwords, respectively, of the corresponding second tables;
- the first party sends said at least two fourth passwords, together with the first identifier and the first password, to the central authentication server of the second party from the corresponding first device; the second party verifying that said at least two fourth passwords received coincide with those of the corresponding third table; and if they are correct, the central authentication server sends a confirmation to the first device confirming that the operation was successfully performed.

The message encrypted with the fifth password is preferably an SMS message sent directly to the second device.

Alternatively, said message encrypted with the fifth password is a message sent to the first device of the first party which, after processing said message and formatting it, forwards it to the second device over one of the possible communication channels between said first and second devices in an automatic or semi-automatic operation with the intervention of the first party.

Said encrypted message can be sent from the central authentication server to the second device over the Internet.

The message can be transmitted between the first device and the second device of the first party by means of using QR barcodes (Quick Response barcode, which is a system for storing information in a dot matrix or in a barcode). Therefore, when the first device receives the message it transforms it into a QR barcode that is displayed on screen and is obtained by the second device for subsequent treatment thereof.

The pre-established number of rows of the third table is preferably equal to the desired number of authentications that can be made between said first and second parties using said third table.

In summary, the system for authentication is constructed using four physical or logical devices, i.e., the first device, the second device, the third device and the central authentication server, with the capabilities described in the invention; two authentication applications, i.e., the first authentication application installed in the second device and the second authentication application installed in the central authentication server, performing the operations described in the invention for each of. them; three password tables created as detailed in the description of the invention, and two parties, i.e., the first party and the second party, performing an authentication operation with one another following the method for authentication of the invention.

### Brief Description of the Drawings

To complement the description that is being made and for the purpose of aiding to better understand the features of the invention according to a preferred practical embodiment thereof, a set of drawings is attached as an integral part of said description in which the following is depicted with an illustrative and non-limiting character:
Figure 1 shows a diagram of the flow of messages and operations of the devices of the system for authentication of the invention.
Figure 2 shows a diagram of the relations between tables TB3, TA1 and TA2.
Figure 3 shows a diagram of the relations between tables TB3, TA1, TA21 and TA22 for the case of using a dual-table password card.
Figure 4 shows an example of a dual-table password card.

### Preferred Embodiment of the Invention

In the preferred embodiment of the invention, a person or Party A is connected by the corresponding PC or first device DSO to an application that the corresponding bank entity or Party B has to perform operations over the Internet. Party A and Party B are identified by means of respective unique and one-to-one identifiers IdA and IdB.

Party A furthermore has a mobile phone as a second device DA1 and a dual-table password card as a third device DA2. Party B is represented by an application on the Internet with a central authentication server CAS.

Party A has two password tables available, a first table TA1 contained in mobile phone DA1 and a second table TA2 contained in the password card, which in this case, splits into two second tables TA21 and TA22 since it is a dual-table password card.

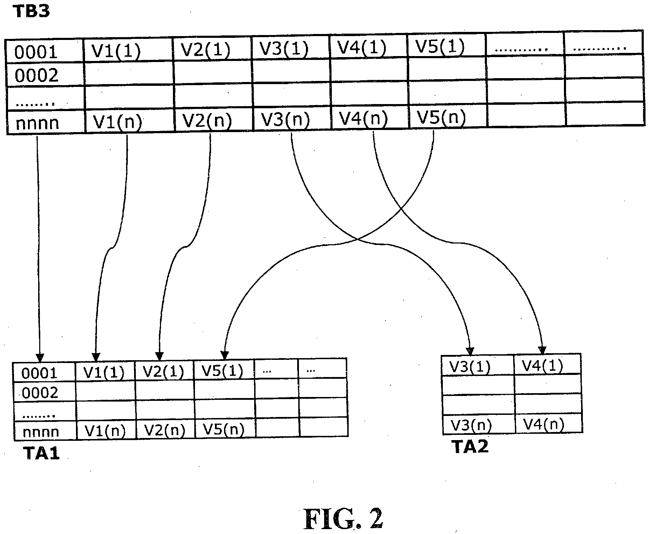

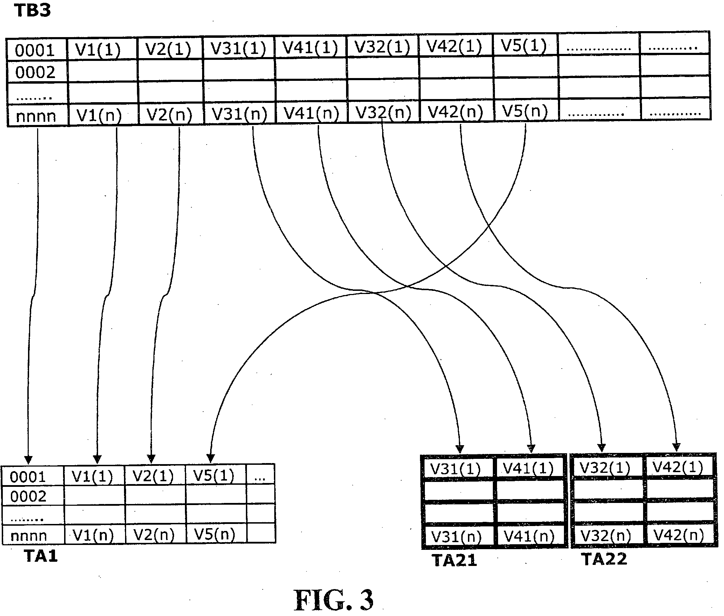

Party B, with which Party A is to be authenticated, has a third password table TB3 in the central authentication server CAS that is different from the first and second tables TA1 and TA2 (or TA21 and TA22 in the case of a dual-table password card) but completely related to them by the logic contained in the system. As shown in Figures 2 and 3 and as will be explained in detail below, the third table TB3 is the only table containing all the passwords (first, second, third, fourth and fifth passwords V1, V2, V3, V4 and V5) that are going to be exchanged and used between the parties throughout the authentication process, the first and second tables TA1 and TA2, or second tables TA21 and TA22, being created from the third table TB3, and complementing one another in order to include all the passwords stored in TB3.

The generic third password table TB3 is made up of a pre-set number of rows, there being as many rows as there are authentication operations desired to be performed with it. The authentication application of the central authentication server CAS managing this third table TB3 has a counter that indicates at all times the next row of passwords that must be used in an authentication operation.

In order for Party A to be able to exchange all the passwords required by the authentication process, said Party A must have the first and second tables TA1 and TA2 available; if said party has only one of them it will be impossible to end the process.

The central authentication server CAS of Party B has stored therein as many third tables TB3 as there are different parties A that want to perform authentication operations with Party B, and each third table TB3 is different for each of these Parties A, such that there is a one-to-one relation between each of the type A Parties and the third tables TB3 managed by the CAS.

Each of the third tables TB3 has a different identifier and it is directly related in a one-to-one manner with the identifier IdA by which the central authentication server CAS knows each of the Parties A that are going to use the system for authentication object of the invention herein described.

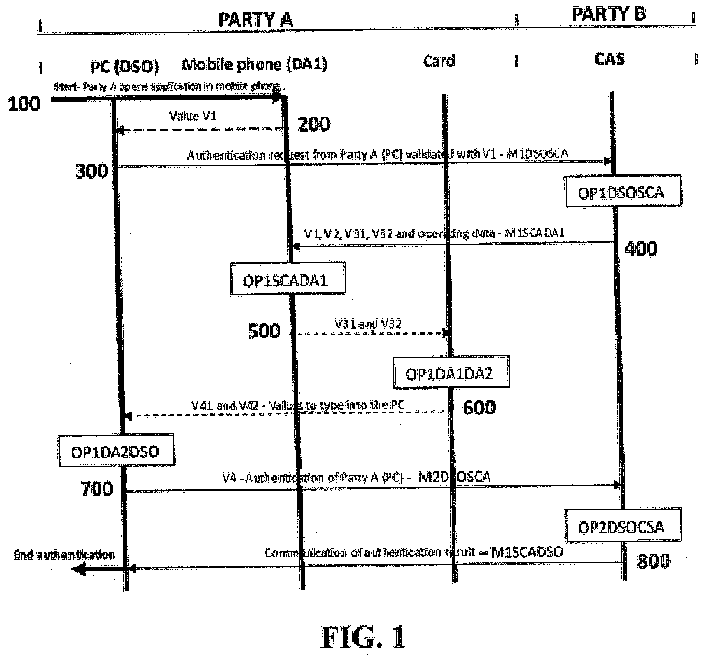

As shown in Figure 1, when A wants to perform an operation that must be authenticated, such as an identification operation, money transfer, authorization for an order to be executed, for example, by means of the corresponding PC, Party A connects to the web page of Party B to perform operations over the Internet. The party initiates an authenticated operation request for which the application requests a password.

Said Figure 1 shows the communication automatically established over a communication channel between devices using a solid line, and it shows the communication established manually by Party A with a dotted line.

Party A opens an authentication application previously downloaded in the corresponding mobile phone (step 100), and this application access row counter indicating the rows that were used, searches for the new row to be used in the corresponding table TA1, locates the value of the first password V1 of the row and displays it on screen (step 200) so that it is used in the operation request that Party A is going to make from the corresponding PC.

Party A types in the first password V1 in the corresponding PC which is sent to the central authentication server CAS of Party B (step 300) together with the identifier IdA of Party A and data about the operation to be authenticated (message M1DSOSCA).

The central authentication server CAS receives said message M1 DSOSCA and accesses the third password table TB3 corresponding to the identifier IdA of Party A received. It consults the row counter indicating the rows of said table TB3 that were used and accesses the row to be used in this authentication operation. It verifies that the first password V1 of said row coincides with what reaches it (operation OP1 DSOSCA). In the event that there is no coincidence between the first password V1 received and the one in the row to be used, the central authentication server CAS verifies if the first password V1 received coincides with the one corresponding to the row prior to the row indicated by the corresponding row counter indicating the rows of the corresponding table TB3 that were used, and if this is the case, it proposes performing a synchronization operation that sets the counters of the third and first tables TB3 and TA1 with the same value so that they are synchronized again; in the event that there is no coincidence between the first password V1 received and the one in the row to be used but it is not the preceding case either, the central authentication server CAS responds to the PC indicating the problem that is detected and ends the operation. In the event that there is coincidence between the first password V1 received and the one in the row to be used, the central authentication server CAS sends to the mobile device DA1 of Party A (step 400) an SMS (message M1SCADA1) which is headed by the second identifier IdB and contains the data about the operation to be authenticated, together with the first password V1, a second password V2 and third passwords V31 and V32, where all these passwords are passwords of the row being used, all this with the exception of the second identifier IdB being encrypted with the fifth password V5 of the row being used; the row counter indicating the rows of said table TB3 that were used increases by one unit; it remains in standby to receive the message necessary for ending the authentication operation that has been started.

The authentication application open in the mobile phone of Party A receives the SMS, verifies the second identifier IdB, accesses the first password table TA1, consults the row counter indicating the rows of said table that were used and accesses the row that is being used; it decrypts the SMS with the fifth password V5 of said row and verifies that the first and second passwords V1, V2 received coincide with those of said row (operation OP1SCADA1). In the event that there is no coincidence between the first and second passwords V1, V2 received and those in the row to be used, the authentication application of the mobile phone considers the operation to have ended, indicating to Party A that there was a problem with the message received from Party B and for Party A to contact Party B. In the event that there is coincidence between the first and second passwords V1, V2 received and those which the application of the mobile phone has in the row to be used, Party B is authenticated with respect to Party A and the authentication application of the mobile phone displays on screen for Party A the data about the operation received in said message so that Party A can authorize it; if Party A gives the corresponding approval for this data, the authentication application of the mobile phone provides the third passwords V31 and V32 (step 500) received in the message to Party A.

Party A searches in the dual-table password card (operation OP1 DA1 DA2) for value V41 in row V31 of table TA21, and value V42 in row V32 of table TA22 (step 600).

Party A types in these values V41 and V42 in the corresponding PC (operation OP1DA2DSO), which sends them to the central authentication server CAS (step 700) to authenticate Party A together with the identifier IdA of Party A and the first password V1 used previously (message M2DSOSCA).

The central authentication server CAS of Party B verifies that the data reaching it is the correct data for the ongoing authentication of Party A (operation OP2DSOSCA); if the data is correct, authentication is considered to have ended and it communicates the result thereof to the PC (step 800) with a message M1SCADSO containing the first identifier IdA of Party A and the second identifier, together with the rest of the data about the operation and the indication that the operation was correctly authenticated.

The PC displays the result of the authentication operation to Party A.

This system for authenticating operations disclosed in the preferred embodiment obtains the following:
- Even if a delinquent "copies" the authentication application from the mobile phone of a user with the corresponding password tables or steals the mobile phone, the delinquent cannot commit any fraud because the delinquent must also have the password card to end the authentication.
- Even if a delinquent intercepts an SMS, frauds cannot be committed based on the modification thereof in online mode because the SMS is encrypted.
- It is not necessary to use a PIN to open the application in the mobile phone because the application alone cannot perform authentication operations without the password card.
- Encryption/decryption of the messages which are exchanged is possible because the authentication application in the mobile phone has passwords to be readily used.
- The only two keystroking operations that Party A has to perform are performed in the corresponding PC, which said party is already used to handling.

Furthermore, in the preferred embodiment of the invention, the client is familiar with the two password devices handled by the client, i.e., mobile phone and password card.

The synchronization process proposed by the second authentication application of the central authentication server CAS when Party A has requested an authentication operation using a value of the first password V1 corresponding to the first password of the row prior to the row indicated by the corresponding row counter indicating the rows of the corresponding third table TB3 that were used can be carried out as follows:
- The central authentication server CAS sends a message to the first device DSO indicating that a synchronization operation must be performed and that to that end it must use a synchronization password that is indicated to it which corresponds with the fifth password V5 of the row indicated by the row counter indicating the next row of the corresponding third table TB3 to be used so that the first device DSO informs Party A.
- Once the message is sent, the value of the counter increases by one unit.
- Party A sees the message received in the corresponding first device DSO and requests a synchronization operation from the first authentication application of the corresponding second device DA1; the latter asks Party A to indicate the value of the synchronization password to be treated.
- The first authentication application receives the value of said synchronization password, checks that it coincides with the value of the fifth password V5 of the next row indicated by the corresponding counter, and if it coincides, it sets the value of the counter with the row number following the one containing said fifth password V5.

The counters of the third and first tables TB3, TA1 thus have the same value and are synchronized again.

The manner in which the first password table, second password table (or tables) and third password table are generated using the system and the relation between them are explained below.

As shown in Figure 2, each row of the third table TB3 is made up of six or more-data cells, where:
a. The first cell TB3C1 contains a sequential number indicating the serial number of the row within the table starting from number 1.
b. The second cell TB3C2 contains the first password V1 consisting of a random number obtained in the process of generating this third table TB3. The length thereof is adapted to the security level required by the environment where the system for authentication is applied, but a minimum of four figures is advisable. The requirement that a specific value of V1 can only appear once within one and the same table must be complied with.
c. The third cell TB3C3 contains the second password V2 consisting of a random alphanumeric value obtained in the process of generating this third table TB3. The length thereof is adapted to the security level required by the environment where the system for authentication is applied, but a minimum of five figures is advisable.
d. The fourth cell TB3C4 contains the third password V3 consisting of a random number comprised between zero and the figure expressing the number of rows of the second table TA2-(equal to the number of rows of the third table TB3) obtained in the process of generating the third table TB3. The requirement that a specific value of V3 can only appear once within one and the same table must be complied with.
e. The fifth cell TB3C5 contains the fourth password V4 consisting of a random number obtained in the process of generating this third table TB3. The length thereof is adapted to the security level required by the environment where the system for authentication is applied, but a minimum of four figures is advisable.
f. The sixth cell TB3C6 contains the fifth password V5 consisting of a random alphanumeric value obtained in the process of generating this third table TB3. The length thereof is adapted to the security level required by the environment where the system for authentication is applied, but a minimum of five figures is advisable.

There can be a seventh cell and successive cells provided that the security level required by the environment where the system for authentication is applied advises more complex encryptions of the messages received and sent from the central authentication server. All these passwords will contain a random alphanumeric value (V6, V7, ...) obtained in the process of generating the third table TB3. Likewise, the length thereof will be adapted to the security level required by the environment where the system for authentication is applied, but a minimum of five alphanumeric characters is advisable.

In the process of generating each of these third tables TB3:
a. The identifier of each of the tables to be generated is created freely with the sole constraint that said name be unique within the set of already generated tables.
b. The only input variables that must be set for the process of generation are those relating to: the number of rows the table must have, which must correspond with the desired number of authentications that can be made between Party A and Party B using said table; and those relating to the desired number of columns the table should have, five being the minimum number of columns.
c. To generate the random numbers or character strings, the process of generation uses randomization software algorithms. Depending on the security requirements to be complied with, these algorithms can use variables created by hardware devices.

The first and second tables TA1 and TA2 are made up of a pre-set number of rows, there being as many rows as in the third table TB3. The content of each and every one of the rows of the first and second tables TA1 and TA2 originates from that existing in the same row of the third table TB3, and the only difference between them is which cells of the third table TB3 are contemplated in the rows of the first table TA1 and which are contemplated in the second table TA2.

The rows of the first table TA1 are made up of four or more data cells, where:
a. The first cell of row TA1C1 contains the row number (nnnn) of the third table TB3 from where the data contained in the row is going to be extracted;
b. The second cell of row TA1C2 contains the same value of the first password V1 existing in cell TB3C2 of the same row of the third table TB3;
c. The third cell TA1C3 of the row contains the same value of the second password V2 existing in cell TB3C3 of the same row of the third table TB3;
d. The fourth cell TA1C4 of the row contains the same value of the fifth password V5 existing in cell TB3C6 of the same row of the third table TB3;
e. When there are a sixth cell and successive cells in the third table TB3, from where the first table TA1 originates, these cells appear with the same content and sequence in all the rows of the first table TA1.

The authentication application of the mobile phone managing this first table TA1 has a row counter indicating at all times the next row of passwords that must be used in an authentication operation.

In the second table TA2:
a. The first cell TA2C1 contains the same random number of the third password V3 in the fourth cell TB3C4 of the third table TB3.
b. The second cell TA2C2 contains the random number of the fourth password V4 in the fifth cell TB3C5 of the third table TB3.

If the third device DA2 is a dual-table password card, the first, second and third tables are slightly different (see Figure 3).

In this case, it must be taken into account that the second table TA2 is replaced with two second tables, TA21 and TA22. The number of rows of these second tables TA21 and TA22 is limited by the size of the dual-table password card, and it is advisable that they have a value of 50 or 60 rows. This value is taken into account in the process of generating the third table TB3 because in this case, cells TB3C4 and TB3C5 of table TB3 are replaced with cells TB3C41, TB3C42 and TB3C51, TB3C52, the content of which is:
a. cell TB3C41, a random number V31, comprised between zero and the figure expressing the number of rows of the table TA21;
b. cell TB3C42, a random alphanumeric value V41 the length of which is adapted to the security level requirements of the system, a minimum of two positions being advisable;
c. cell TB3C51, a random number V32, comprised between zero and the figure expressing the number of rows of the table TA22;
d. cell TB3C52, a random alphanumeric value V42 the length of which is adapted to the security level requirements of the system, a minimum of three positions being advisable.

In this case of a dual-table password card, the possible number of rows of the third table TB3 is limited by the number of rows in the second tables TA21 and TA22, and it should not exceed the figure resulting from multiplying the number of rows of TA21 x the number of rows of TA22. The purpose of this requirement is so that the use of one and the same combination of rows of the two tables is never repeated in the different authentication operations that can be performed with one and the same password card. In other words, once a specific pair of rows, one from table TA21 and the other from table TA22, is used in an authentication operation, this combination of rows cannot be used again, therefore the fourth password formed by the series of characters from V41 and V42 is a one-time password (OTP) within the operations contemplated by the system object of the invention.

In this case of a dual-table password card, the algorithm generating values V31 and V32 for a specific row of the third table TB3 controls that said pair of values does not appear in any of the rows previously generated for the same third table TB3.

In this case of a dual-table password card, column TA1C4 of the first table TA1 is replaced with columns TA1C41 and TA1C42 containing, respectively, the values of columns TB3C4 (V31) and TB3C6 (V32) of the third table TB3 from which it originates.

As previously indicated, in this case the second table TA2 is broken down into two second tables, TA21 and TA22. Table TA21 contains the values of columns TB3C41 and TB3C42 of the third table TB3 from which it originates. Table TA22 contains the values of columns TB3C51 and TB3C52 of the third table TB3 from which it originates.

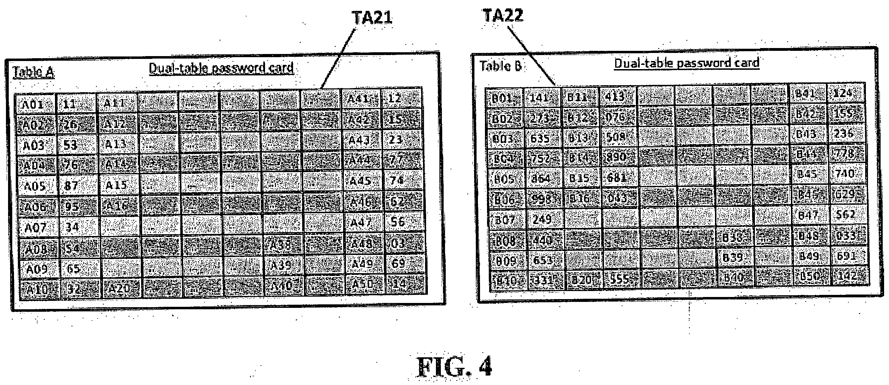

Figure 4 shows a possible example of a dual-table password card.

This example uses 50 rows per table such that by combining the rows of the two tables there is a total of 50x50=2,500 passwords that can be used. The user is asked to provide the authentication password, asking said user to type in the passwords of two identifiers, one from table A and the other-from table B. Within the system object of the invention, the identifiers of the rows to be used correspond with values V31 and V32 of tables TA21 and TA22, respectively, and the values associated with these row identifiers correspond with values V41 and V42 of the same tables.

Party A is informed of which passwords of the card must be typed in to authenticate the operation by means of a message such as "Passwords to be typed in: Row A09 and row B48".

In the PC or other means in which the operation is being performed (first device DSO), the following is requested:
*"Type in the passwords of:*
   *row A:* xxx (the party must type in the password of row A09)
   *row B:* xxx" (the party must type in the password of row B48).

A much larger volume of passwords can be generated as a result of this dual-table password card, which prevents the need to reuse passwords.

There is no risk of fraud in the system for authentication that has been defined because:
- The system using the different passwords for authentication controls that these values cannot be used more than once within the operations of the system (OTPs).
- The channel over which the identifier of the password of the password card that must be used in the authentication process is communicated is different from the channel used to provide said value.
- The message communicating the identifier of the password that must be used in the authentication process is encrypted and authenticated.

The advantages of OTP systems are thus achieved, and malware installed in one of the channels being able to intercept and manipulate the messages or tracking the identifiers and their associated values is also avoided.

As a complement and as a step prior to the described authentication, when a first party, Party A, wants to use the system for authentication object of the invention, said first party must come to an agreement with the second party, Party B, so that a third table type TB3 and the corresponding first and second tables TA1 and TA2 derived from it are assigned. Said tables can be treated from then onwards by the central authentication server CAS and the corresponding identifiers within the CAS are directly related in a unique manner with the identifier IdA by which the CAS knows said Party A.

The first table TA1 is delivered to Party A by means of a download in the corresponding second device DA1.

The second table TA2 is delivered to Party A in the corresponding third device DA2, being a security token, a password card, preferably a two-sided password card, with tables TA21 and TA22, or any other means with capacity for the storage and subsequent consultation thereof.

In view of this description and set of drawings, the person skilled in the art will understand that the embodiments of the invention that have been described can be combined in a number of ways within the object of the invention.

## Claims

1. System for mutual authentication of an operation between a first party (Party A) and a second party (Party B) based on a dialogue during which said first and second parties exchange a predetermined number of one-time passwords, wherein:
- said first and second parties are identified in a one-to-one manner by means of a first identifier (IdA) and a second identifier (IdB);
- said first and second parties are in communication by means of two or more different communication channels;
- said first party (Party A) has a first device (DSO), a second device (DA1) hosting a first authentication application and a third device (DA2);
- said second party has a central authentication server (CAS) hosting a second authentication application associated with said first authentication application;
- each of the second and third devices (DA1, DA2) having first and second password tables (TA1 and TA2), respectively, and the central authentication server (CAS) having a third password table (TB3) associated, with a one-to-one correspondence, with the first identifier (IdA);
wherein:
- said third table (TB3) has a pre-established number of rows equal to the number of rows of the first and second tables (TA1, TA2),
- said third table (TB3) contains in each row at least all the one-time passwords that are going to be exchanged and used in the system while the operation takes place, and it is the only table containing all the passwords;
- said first and second tables (TA1, TA2) each have a part of all the one-time passwords that are going to be exchanged and used in the system while the operation takes place, said first and second tables always having all the passwords in one and the same row;
wherein:
- the first party (Party A) is adapted to obtain a first password (V1) to be used in the operation by means of the corresponding second device (DA1);
- the first party (Party A) is adapted to send this first password (V1) together with the corresponding first identifier (IdA) and together with data relating to said operation over a first communication channel to the central authentication server (CAS) of the second party (Party B) by means of the corresponding first device (DSO);
- the central authentication server (CAS) is adapted to verify that said first password (V1) received coincides with the corresponding password in the row of the corresponding third table (TB3) associated with the first identifier (IdA) that is being used, and if it is correct it is adapted to send a message (M1SCADA1) headed by the second identifier (IdB) containing a second password (V2), at least a third password (V3) and said data about the operation over a second communication channel to the first or second devices of the first party (Party A), which message is encrypted with a fifth password (V5), said second, third and fifth passwords (V2, V3, V5) being located in the same row as said first password (V1) in the third table (TB3);
- the first party (Party A) is adapted to receive the encrypted message, is adapted to verify the second identifier (IdB) and the second device (DA1) is adapted to decrypt it with the fifth password (V5) contained in the corresponding first table (TA1) and is adapted to verify that the second password (V2) received coincides with that of the corresponding first table (TA1); if said second password is correct, the second party (Party B) isadapted to be authenticated with respect to the first party (Party A), and the second device (DA1) is adapted to present to the first party (Party A) the data about the operation received in said message (M1SCADA1) so that it can verify said data; if the first party (Party A) gives the corresponding approval for this data, the second device (DA1) is adapted to provide said at least third password (V3) received in said message (M1SCADA1) to the first party (Party A);
- by means of the second table (TA2) contained in the corresponding third device (DA2) the first party (Party A) is adapted to obtain at least a fourth password (V4) located in the same row as said at least third password (V3) of the corresponding second table (TA2);
- the first party (Party A) is adapted to send said at least fourth password (V4), together with the first identifier (IdA) and the first password (V1), from the corresponding first device (DSO) to the central authentication server (CAS) of the second party (Party B); the second party (Party B) is adapted to verify that said at least fourth password (V4) received coincides with that of the corresponding third table (TB3); and if it is correct, the central authentication server (CAS) is adapted to send a confirmation to the first device (DSO) confirming that the operation was successfully performed.

2. System according to claim 1, wherein the second authentication application hosted in said central authentication server (CAS) has a row counter indicating the last row of the third table (TB3) that was used, and wherein said row 1. is adapted to verify 5. is adapted to be authenticated counter increases by one unit every time the central authentication server (CAS) sends to the second device (DA1) the encrypted message (M1SCADA1) generated as a response to the acceptance of said first password (V1) received from the first party (Party A) as valid.

3. System according to any of claims 1-2, wherein the first authentication application hosted in said second device (DA1) has a row counter indicating the last row of the first table (TA1) that was used, and wherein said row counter increases by one unit every time the first authentication application accepts as authentic said encrypted message (M1SCADA1) received from the second party (Party B).

4. System according to claims 2 and 3, further including a synchronization process for synchronizing the row counters of said first and third tables (TA1, TB3) that can be run in response to the central authentication server (CAS) verifying that the first party (Party A) requests an operation using a value of the first password (V1) corresponding to the row prior to the row indicated by the row counter indicating the rows of the third table (TB3) that were used.

5. System according to any of claims 1-4, wherein said encrypted message is an SMS message sent to the second device (DA1).

6. System according to any of claims 1-4, wherein said encrypted message is a message sent to the first device (DSO) which, after processing said message and formatting it, forwards it to the second device (DA1) over one of the possible communication channels between said first and second devices (DSO, DA1) in an automatic or semi-automatic operation with the intervention of the first party (Party A).

7. System according to claim 6, wherein said message processing and formatting includes the use of QR barcodes.

8. System according to any of claims 1-4, wherein said encrypted message is sent from the central authentication server (CAS) to the second device (DA1) over the Internet.

9. System according to any of the preceding claims, wherein said pre-established number of rows of the third table (TB3) is equal to the desired number of authentications that can be made between said first and second parties (Party A, Party B) using said third table (TB3).

10. System according to any of the preceding claims, wherein each third table (TB3) is generated by means of randomization algorithms each having a single and different identifier.

11. System according to any of the preceding claims, wherein each row of the third table (TB3) contains at least five columns, corresponding to all the passwords that are going to be exchanged and used while each operation takes place.

12. System according to any of the preceding claims, wherein said predetermined number of one-time passwords exchanged between said first and second parties is at least four.

13. System according to any of the preceding claims, wherein once the authentication of said first and second parties (Party A, Party B) is performed, at least one message exchanged between them is encrypted with at least a sixth one-time password, said at least a sixth password being stored in the same row as said first password (V1) used for authentication.

14. System according to any of the preceding claims, wherein the central authentication server (CAS) of the second party (Party B) contains as many third tables (TB3) as there are different first parties (Party A) that want to perform authentication operations with said second party (Party B), and each third table (TB3) is different for each of these first parties (Party A).

15. System according to any of the preceding claims, wherein said third device (DA2) is a password card where the second table (TA2) is printed.

16. System according to any of claims 1-15, wherein said third device (DA2) is a dual-table password card where two second tables (TA21, TA22) are printed.

17. System according to claim 16, wherein said encrypted message (M1SCADA1) contains at least two third passwords (V31, V32) located in the same row as said first password (V1) in the third table (TB3) which are provided by the second device (DA1) to the first party (Party A) if the latter is in agreement with the data about the operation also received in said message (M1SCADA1); and
- by means of said second tables (TA21, TA22) the first party (Party A) obtains at least two fourth passwords (V41, V42) each of which is located in the same rows as said at least two third passwords (V31, V32), respectively, of the corresponding second tables (TA21, TA22);
- the first party (Party A) sends said at least two fourth passwords (V41, V42), together with the first identifier (IdA) and the first password (V1), to the central authentication server (CAS) of the second party (Party B) from the corresponding first device (DSO); the second party (party B) verifying that said at least two fourth passwords (V41, V42) received coincide with those of the corresponding third table (TB3); and if they are correct, the central authentication server (CAS) sends a confirmation to the first device (DSO) confirming that the operation was successfully performed.

## Patentansprüche

1. System für eine gegenseitige Authentifizierung zwischen einer ersten Partei (Partei A) und einer zweiten Partei (Partei B), auf der Grundlage eines Dialogs, im Verlauf dessen die genannte erste und zweite Partei eine vorgegebene Anzahl an Einmalkennwörtern austauschen, in dem:
- die genannte erste und zweite Partei über eine erste Kennung (IdA) und eine zweite Kennung (IdB) eindeutig identifiziert sind;
- die genannte erste und zweite Partei über zwei oder mehr verschiedene Kommunikationskanäle miteinander verbunden sind;
- die genannte erste Partei (Partei A) eine erste Vorrichtung (DSO) aufweist, eine zweite Vorrichtung (DA1), auf der eine erste Authentifizierungsapplikation installiert ist, sowie eine dritte Vorrichtung (DA2);
- die genannte zweite Partei einen zentralen Authentifizierungsserver (CAS) aufweist, auf dem eine zweite Authentifizierungsapplikation installiert ist, die mit der genannten ersten Authentifizierungsapplikation verknüpft ist;
- wobei die erste und die zweite Vorrichtung (DA1, DA2) jeweils eine erste und zweite Tabelle mit Kennwörtern (TA1 und TA2) haben und wobei der zentrale Authentifizierungsserver (CAS) eine mit diesen verknüpfte dritte Tabelle mit Kennwörtern (TB3) hat, mit einer eindeutigen Zuordnung zu der ersten Kennung (IdA);
in dem:
- die genannte dritte Tabelle (TB3) eine vorgegebene Zeilenanzahl hat, die der Zeilenanzahl der ersten und zweiten Tabelle (TA1, TA2) entspricht,
- die genannte dritte Tabelle (TB3) in jeder Zeile zumindest alle Einmalkennwörter enthält, die im System ausgetauscht und benutzt werden, solange die Operation stattfindet, und es auch die einzige Tabelle ist, die sämtliche Kennwörter enthält;
- die erste und zweite Tabelle (TA1, TA2) jeweils einen Teil aller Einmalkennwörter enthalten, die in dem System ausgetauscht und genutzt werden, solange die Operation stattfindet, wobei die genannte erste und zweite Tabelle alle Kennwörter in der gleichen Zeile enthalten;
in dem:
- die erste Partei (Partei A) so ausgeführt ist, dass sie ein erstes Kennwort (V1) erhält, das sie über die entsprechende zweite Vorrichtung (DA1) in der Operation benutzen soll;
- die erste Partei (Partei A) so ausgeführt ist, dass sie dieses erste Kennwort (V1) zusammen mit der entsprechenden ersten Kennung (IdA), und zusammen mit Daten zu dieser Operation, über einen ersten Kommunikationskanal an den zentralen Authentifizierungsserver (CAS) der zweiten Partei (Partei B) über die entsprechende erste Vorrichtung (DSO) sendet;
- der zentrale Authentifizierungsserver (CAS) so ausgeführt ist, dass er prüft, ob das genannte erhaltene erste Kennwort (V1) mit dem entsprechenden Kennwort in der Zeile der entsprechenden dritten Tabelle (TB3) übereinstimmt, das mit der ersten benutzten Kennung (IdA) verknüpft ist, und falls dies zutrifft, so ausgeführt ist, dass er eine Nachricht (M1SCADA1) sendet, der die zweite Kennung (IdB) vorangestellt ist und die ein zweites Kennwort (V2), zumindest ein drittes Kennwort (V3) und die genannten Daten zur Operation enthält, was über einen zweiten Kommunikationskanal an die erste oder zweite Vorrichtung der ersten Partei (Partei A) stattfindet, wo die genannte Nachricht mit einem fünften Kennwort (V5) verschlüsselt wird, wobei das genannte zweite, dritte und fünfte Kennwort (V2, V3, V5) in der dritten Tabelle (TB3) jeweils in der gleichen Zeile stehen wie das genannte erste Kennwort (V1);
- die erste Partei (Partei A) so ausgeführt ist, dass sie die verschlüsselte Nachricht erhält und so ausgeführt ist, dass sie die zweite Kennung (IdB) prüfen kann, und die zweite Vorrichtung (DA1) so ausgeführt ist, dass sie diese mit dem fünften Kennwort (V5) entschlüsselt, das in der entsprechenden ersten Tabelle (TA1) enthalten ist und so ausgeführt ist, dass sie prüfen kann, ob das zweite erhaltene Kennwort (V2) mit dem der entsprechenden ersten Tabelle (TA1) übereinstimmt; wenn das genannte zweite Kennwort richtig ist, so ist die zweite Partei (Partei B) so ausgeführt, dass sie in Bezug auf die erste Partei (Partei A) authentifiziert werden kann und die zweite Vorrichtung (DA1) ist so ausgeführt, dass sie der ersten Partei (Partei A) die Daten zur Operation vorlegen kann, die sie in der genannten Nachricht (M1SCADA1) erhalten hat, so dass sie diese Daten prüfen kann; wenn die erste Partei (Partei A) die entsprechende Genehmigung für diese Daten erteilt, so ist die zweite Vorrichtung (DA1) so ausgeführt, dass sie das genannte zumindest eine dritte Kennwort (V3), das sie in der genannten Nachricht (M1SCADA1) erhalten hat, der ersten Partei (Partei A) zur Verfügung stellen kann;
- über die zweite Tabelle (TA2), die in der entsprechenden dritten Vorrichtung (DA2) enthalten ist, ist die erste Partei (Partei A) so ausgeführt, dass sie zumindest ein viertes Kennwort (V4) erhält, das in der gleichen Zeile steht, wie das genannte zumindest eine dritte Kennwort (V3) der entsprechenden zweiten Tabelle (TA2);
- die erste Partei (Partei A) ist so ausgeführt, dass sie das genannte vierte Kennwort (V4), zusammen mit der ersten Kennung (IdA), und das erste Kennwort (V1) von der entsprechenden ersten Vorrichtung (DSO) an den zentralen Authentifizierungsserver (CAS) der zweiten Partei (Partei B) sendet; die zweite Partei (Partei B) ist so ausgeführt, dass sie prüfen kann, ob das zumindest eine vierte erhaltene Kennwort (V4) mit dem der entsprechenden dritten Tabelle (TB3) übereinstimmt; und wenn dies richtig ist, so ist der zentrale Authentifizierungsserver (CAS) so ausgeführt, dass er eine Bestätigung an die erste Vorrichtung (DSO) sendet, um zu bestätigen, dass die Operation mit Erfolg durchgeführt wurde.

2. System nach Anspruch 1, in dem die zweite Authentifizierungsapplikation, die im genannten zentralen Authentifizierungsserver (CAS) installiert ist, einen Zeilenzähler hat, der die letzte benutzte Zeile der dritten Tabelle (TB3) anzeigt und in dem der genannte Zeilenzähler jeweils um eins zunimmt, wenn der zentrale Authentifizierungsserver (CAS) der zweiten Vorrichtung (DA1) die verschlüsselte Nachricht (M1SCADA1) sendet, die erstellt wurde als Antwort auf die Bestätigung der Gültigkeit des von der ersten Partei (Partei A) erhaltenen genannten ersten Kennworts (V1).

3. System nach einem der Ansprüche 1 bis 2, in dem die erste Authentifizierungsapplikation, die in der zweiten Vorrichtung (DA1) installiert ist, einen Zeilenzähler hat, der die letzte benutzte Zeile der ersten Tabelle (TA1) anzeigt, und in dem der genannte Zeilenzähler jeweils um eins zunimmt, wenn die erste Authentifizierungsapplikation die Echtheit der genannten verschlüsselten Nachricht (M1SCADA1), die sie von der zweiten Partei (Partei B) erhalten hat, akzeptiert.

4. System nach den Ansprüchen 2 und 3, das weiterhin einen Synchronisierungsvorgang enthält, um die Zeilenzähler der genannten ersten und dritten Tabelle (TA1, TB3) zu synchronisieren, wobei dieser Vorgang ausgeführt werden kann in Antwort auf die Prüfung seitens des zentralen Authentifizierungsservers (CAS), dass die erste Partei (Partei A) eine Operation beantragt mit Nutzung eines Werts des ersten Kennworts (V1), das der Zeile entspricht, die vor der Zeile liegt, die von dem Zeilenzähler angegeben wird, der die von der dritten Tabelle (TB3) benutzten Zeilen angibt.

5. System nach einem der Ansprüche 1 bis 4, in dem die genannte verschlüsselte Nachricht eine an die zweite Vorrichtung (DA1) gesandte SMS-Nachricht ist.

6. System nach einem der Ansprüche 1 bis 4, in dem die genannte verschlüsselte Nachricht eine an die erste Vorrichtung (DSO) gesandte Nachricht ist, die nach einer Verarbeitung und Formatierung dieser Nachricht diese an die zweite Vorrichtung (DA1) sendet, über einen der zwischen der ersten und zweiten Vorrichtung (DSO, DA1) möglichen Kommunikationskanäle, wobei dies mit Intervention der ersten Partei (Partei A) in einer automatischen oder halbautomatischen Operation stattfindet.

7. System nach Anspruch 6, in dem die genannte Verarbeitung und Formatierung der Nachrichten die Benutzung von QR-Codes umfasst.

8. System nach einem der Ansprüche 1 bis 4, in dem die genannte verschlüsselte Nachricht vom zentralen Authentifizierungsserver (CAS) aus per Internet an die zweite Vorrichtung (DA1) gesandt wird.

9. System nach einem der vorhergehenden Ansprüche, in dem die genannte vorgegebene Zeilenanzahl der dritten Tabelle (TB3) gleich ist, wie die gewünschte Anzahl an Authentifizierungen, die zwischen der genannten ersten und zweiten Partei (Partei A, Partei B) durch Benutzung der genannten dritten Tabelle (TB3) durchgeführt werden können.

10. System nach einem der vorhergehenden Ansprüche, in dem jede dritte Tabelle (TB3) durch Randomisierungsalgorithmen erstellt wird, wobei jede eine einzige und unterschiedliche Kennung hat.

11. System nach einem der vorhergehenden Ansprüche, in dem jede Zeile der dritten Tabelle (TB3) zumindest fünf Spalten umfasst, die allen Kennwörtern entsprechen, die ausgetauscht und benutzt werden, solange jeweils eine Operation stattfindet.

12. System nach einem der vorhergehenden Ansprüche, in dem die genannte vorgegebene Anzahl an Einmalkennwörter, die zwischen der genannten ersten und zweiten Partei ausgetauscht wird, zumindest vier beträgt.

13. System nach einem der vorhergehenden Ansprüche, in dem nach Abschluss der Durchführung der Authentifizierung der genannten ersten und zweiten Partei (Partei A, Partei B) zumindest eine zwischen diesen ausgetauschte Nachricht mit zumindest einem sechsten Einfachkennwort verschlüsselt wird, wobei das genannte zumindest eine sechste Kennwort in der gleichen Zeile gespeichert wird, wie das genannte erste für die Authentifizierung benutzte Kennwort (V1).

14. System nach einem der vorhergehenden Ansprüche, in dem der zentrale Authentifizierungsserver (CAS) der zweiten Partei (Partei B) die gleiche Anzahl an dritten Tabellen (TB3) enthält wie die Anzahl der vorliegenden ersten Parteien (Partei A), die Authentifizierungsoperationen mit der genannten zweiten Partei (Partei B) durchführen möchten, und in dem jede dritte Tabelle (TB3) für jede dieser ersten Parteien (Partei A) jeweils verschieden ist.

15. System nach einem der vorhergehenden Ansprüche, in dem die genannten dritte Vorrichtung (DA2) eine Karte mit Kennwörtern ist, auf der die zweite Tabelle (TA2) aufgedruckt ist.

16. System nach einem der Ansprüche 1 bis 15, in dem die genannte dritte Vorrichtung (DA2) eine Karte mit Kennwörtern mit einer Tabelle im Dualsystem ist, wo die zweiten Tabellen (TA21, TA22) aufgedruckt sind.

17. System nach Anspruch 16, in dem die genannte verschlüsselte Nachricht (M1SCADA1) zumindest zwei dritte Kennwörter (V31, V32) aufweist, die in der gleichen Zeile stehen wie das genannte erste Kennwort (V1) in der dritten Tabelle (TB3), die von der zweiten Vorrichtung (DA1) der ersten Partei (Partei A) zur Verfügung gestellt werden, wenn letztere mit den Daten zu der Operation einverstanden ist, die ebenfalls in der genannten Nachricht (M1SCADA1) erhalten werden; und
- über die genannten zweiten Tabellen (TA21, TA22) erhält die erste Partei (Partei A) zumindest zwei vierte Kennwörter (V41, V42), von denen jede in der jeweils gleichen Zeile steht, wie die jeweils genannten zumindest zwei dritte Kennwörter (V31, V32) der entsprechenden zweiten Tabellen (TA21, TA22);
- die erste Partei (Partei A) sendet die genannten zumindest zwei vierten Kennwörter (V41, V42) zusammen mit der ersten Kennung (IdA) und dem ersten Kennwort (V1) an den zentralen Authentifizierungsserver (CAS) der zweiten Partei (Partei B) von der entsprechenden ersten Vorrichtung (DSO); wobei die zweite Partei (Partei B) prüft, ob diese zumindest zwei vierten erhaltenen Kennwörter (V41, V42) mit denen der entsprechenden dritten Tabelle (TB3) übereinstimmen; und falls sie richtig sind, sendet der zentrale Authentifizierungsserver (CAS) eine Bestätigung an die erste Vorrichtung (DSO), um so zu bestätigen, dass die Operation mit Erfolg durchgeführt wurde.

## Revendications

1. Système d'authentification mutuelle d'une opération entre une première partie (Partie A) et une deuxième partie (Partie B) sur la base d'un dialogue au cours duquel lesdites première et deuxième parties échangent un nombre prédéfini de mots de passe uniques, dans lequel
- lesdites première et deuxième parties sont identifiées de manière biunivoque au moyen d'un premier identifiant (IdA) et d'un deuxième identifiant (IdB) ;
- lesdites première et deuxième parties sont en communication au moyen de deux canaux de communication différents ou plus;
- ladite première partie (Partie A) possède un premier dispositif (DSO), un deuxième dispositif (DA1) hébergeant une première application d'authentification et un troisième dispositif (DA2) ;
- ladite deuxième partie possède un serveur d'authentification central (CAS) hébergeant une deuxième application d'authentification associée à ladite première application d'authentification ;
- chacun des deuxième et troisième dispositifs (DA1, DA2) ayant des première et deuxième tables de mots de passe (TA1 et TA2), respectivement et le serveur d'authentification central (CAS) ayant une troisième table de mots de passe (TB3) associée, avec une correspondance biunivoque, avec le premier identifiant (IdA) ;
dans lequel :
- ladite troisième table (TB3) possède un nombre préétabli de rangées égal au nombre de rangées des première et deuxième tables (TA1, TA2),
- ladite troisième table (TB3) contient dans chaque rangée au moins tous les mots de passe uniques qui vont être échangés et utilisés dans le système tandis que l'opération a lieu et c'est la seule table contenant tous les mots de passe ;
- lesdites première et deuxième tables (TA1, TA2) possèdent chacune une partie de tous les mots de passe uniques qui vont être échangés et utilisés dans le système tandis que l'opération a lieu, lesdites première et deuxième tables possédant toujours tous les mots de passe dans une seule et même rangée ;
dans lequel :
- la première partie (Partie A) est apte à obtenir un premier mot de passe (V1) devant être utilisé dans l'opération au moyen du deuxième dispositif correspondant 4DA1) ;
- la première partie (Partie A) est apte à envoyer ce premier mot de passe (V1) conjointement avec le premier identifiant correspondant (IdA) et conjointement avec des données relatives à ladite opération sur un premier canal de communication au serveur d'authentification central (CAS) de la deuxième partie (Partie B) ay moyen du premier dispositif correspondant (DSO) ;
- le serveur d'authentification central (CAS) est apte à vérifier que ledit premier mot de passe (V1) reçu coïncide avec le mot de passe correspondant dans la rangée de la troisième table correspondante (TB3) associée au premier identifiant (IdA) qui est utilisé et, s'il est exact, il est apte à envoyer un message (M1SCADA1) mené par le deuxième identifiant (IdB) contenant un deuxième mot de passe (V2), au moins un troisième mot de passe (V3) et lesdites données concernant l'opération sur un deuxième canal de communication au premier ou deuxième dispositif de la première partie (Partie A), lequel message est chiffré avec un cinquième mot de passe (V5), lesdits deuxième, troisième et cinquième mots de passe (V2, V3, V5) étant situés dans la même rangée que ledit premier mot de passe (V1) dans la troisième table (TB3);
- la première partie (Partie A) est apte à recevoir le message chiffré, est apte à vérifier le deuxième identifiant (IdB) et le deuxième dispositif (DA1) est apte à le déchiffrer avec le cinquième mot de passe (V5) contenu dans la première table correspondante (TA1) et est apte à vérifier que le deuxième mot de passe (V2) reçu coïncide avec celui de la première table correspondante (TA1) ; si ledit deuxième mot de passe est exact, la deuxième partie (Partie B) est apte à être authentifiée par rapport à la première partie (Partie A) et le deuxième dispositif (DA1) est apte à présenter à la première partie (Partie A) les données concernant l'opération reçues dans ledit message (M1SCADA1), de sorte qu'elle puisse vérifier lesdites données ; si la première partie (Partie A) donne l'approbation correspondante pour ces données, le deuxième dispositif (DA1) est apte à fournir ledit au moins un troisième mot de passe (V3) reçu dans ledit message (M1SCADA1) à la première partie (Partie A) ;
- au moyen de la deuxième table (TA2) contenue dans le troisième dispositif correspondant (DA2), la première partie (Partie A) est apte à obtenir au moins un quatrième mot de passe (V4) situé dans la même rangée que ledit au moins un troisième mot de passe (V3) de la deuxième table correspondante (TA2);
- la première partie (Partie A) est apte à envoyer ledit au moins un quatrième mot de passe (V4), conjointement avec le premier identifiant (IdA) et le premier mot de passe (V1), depuis le premier dispositif correspondant (DSO) au serveur d'authentification central (CAS) de la deuxième partie (Partie B); la deuxième partie (Partie B) est apte à vérifier que ledit au moins un quatrième mot de passe (V4) reçu coïncide avec celui de la troisième table correspondante (TB3) ; et s'il est exact, le serveur d'authentification central (CAS) est apte à envoyer une confirmation au premier dispositif (DSO) confirmant que l'opération a été effectuée avec succès.

2. Système selon la revendication 1, dans lequel la deuxième application d'authentification hébergée dans ledit serveur d'authentification central (CAS) possède un compteur de rangée indiquant la dernière rangée de la troisième table (TB3) qui a été utilisée et dans lequel ledit compteur de rangée augmente d'une unité à chaque fois que le serveur d'authentification central (CAS) envoie au deuxième dispositif (DA1) le message chiffré ((M1SCADA1) produit en réponse à l'acceptation dudit premier mot de passe (V1) reçu de la première partie (Partie A) comme valide.

3. Système selon l'une quelconque des revendications 1 à 2, dans lequel la première application d'authentification hébergée dans ledit deuxième dispositif (DA1) possède un compteur de rangée indiquant la dernière rangée de la première table (TA1) qui a été utilisée et dans lequel ledit compteur de rangée augmente d'une unité à chaque fois que la première application d'authentification accepte comme authentique ledit message chiffré (M1SCADA1) reçu de la deuxième partie (Partie B).

4. Système selon les revendications 2 et 3, contenant en outre un processus de synchronisation afin de synchroniser les compteurs de rangée desdites première et troisième tables (TA1, TB3) qui peuvent être exécutées en réponse à la vérification, par le serveur d'authentification central (CAS), que la première partie (Partie A) demande une opération utilisant une valeur du premier mot de passe (V1) correspondant à la rangée avant la rangée indiquée par le compteur de rangée indiquant les rangées de la troisième table (TB3) qui ont été utilisées.

5. Système selon l'une quelconque des revendications 1 à 4, dans lequel ledit message chiffré est un message SMS envoyé au deuxième dispositif (DA1).

6. Système selon l'une quelconque des revendications 1 à 4, dans lequel ledit message chiffré est un message envoyé au premier dispositif (DSO) qui, après traitement dudit message et son formatage, l'envoie au deuxième dispositif (DA1) sur un des canaux de communication possibles entre lesdits premier et deuxième dispositifs (DSO, DA1) dans une opération automatique ou semi-automatique avec l'intervention de la première partie (Partie A).

7. Système selon la revendication 6, dans lequel ledit traitement et ledit formatage de message contiennent l'utilisation de codes à barres QR.

8. Système selon l'une quelconque des revendications 1 à 4, dans lequel ledit message chiffré est envoyé par le serveur d'authentification central (CAS) au deuxième dispositif (DA1) par le biais d'Internet.

9. Système selon l'une quelconque des revendications précédentes, dans lequel ledit nombre préétabli de rangées de la troisième table (TB3) est égal au nombre souhaité d'authentifications qui peuvent être effectuées entre lesdites première et deuxième parties (Partie A, Partie B) en utilisant ladite troisième table (TB3).

10. Système selon l'une quelconque des revendications précédentes, dans lequel chaque troisième table (TB3) est produite au moyen d'algorithmes de randomisation ayant chacun un seul identifiant différent.

11. Système selon l'une quelconque des revendications précédentes, dans lequel chaque rangée de la troisième table (TB3) contient au moins cinq colonnes, correspondant à tous les mots de passe qui vont être échangés et utilisés tandis que chaque opération a lieu.

12. Système selon l'une quelconque des revendications précédentes, dans lequel ledit nombre prédéfini de mots de passe uniques échangés entre lesdites première et deuxième parties est d'au moins quatre.

13. Système selon l'une quelconque des revendications précédentes, dans lequel une fois que l'authentification desdites première et deuxième parties (Partie A, Partie B) est effectuée, au moins un message échangé entre elles est chiffré avec au moins un sixième mot de passe unique, ledit au moins un sixième mot de passe étant mémorisé dans la même rangée que ledit premier mot de passe (V1) utilisé pour l'authentification.

14. Système selon l'une quelconque des revendications précédentes, dans lequel le serveur d'authentification central (CAS) de la deuxième partie (Partie B) contient autant que troisièmes tables (TB3) qu'il existe de premières parties différentes (Parties A) qui souhaitent réaliser des opérations d'authentification avec ladite deuxième partie (Partie B) et chaque troisième table (TB3) est différente pour chacune de ces premières parties (Partie A).

15. Système selon l'une quelconque des revendications précédentes, dans lequel ledit troisième dispositif (DA2) est une carte de mot de passe sur laquelle la deuxième table (TA2) est imprimée.

16. Système selon l'une quelconque des revendications 1 à 15, dans lequel ledit troisième dispositif (DA2) est une carte de mot de passe à table double sur laquelle deux deuxièmes tables (TA21, TA22) sont imprimées.

17. Système selon la revendication 16, dans lequel ledit message chiffré (M1SCADA1) contient au moins deux troisièmes mots de passe (V31, V32) situés dans la même rangée que ledit premier mot de passe (V1) dans la troisième table (TB3) qui sont fournis par le deuxième dispositif (DA1) à la première partie (Partie A) si celle-ci est en accord avec les donnée concernant l'opération également reçues dans ledit message (M1SCADA1) ; et
- au moyen desdites deuxièmes tables (TA21, TA2), la première partie (Partie A) obtient au moins deux quatrièmes mots de passe (V41, V42), chacun d'entre eux étant situé dans les mêmes rangées que lesdits au moins deux troisièmes mots de passe (V31, V32) respectivement, des deuxièmes tables correspondantes (TA21, TA22) ;
- la troisième partie (Partie 1) envoie lesdits au moins deux quatrièmes mots de passe (V41, V42) conjointement avec le premier identifiant (IdA) et le premier mot de passe (V1), au serveur d'authentification central (CAS) de la deuxième partie (Partie B) à partir du premier dispositif correspondant (DSO) ; la deuxième partie (Partie B) vérifiant que lesdits au moins deux quatrièmes mots de passe (V41 ? V42) reçus coïncident avec ceux de la troisième table correspondante (TB3) ; et s'ils sont exacts, le serveur d'authentification central (CAS) envoie une confirmation au premier dispositif (DSO) confirmant que l'opération a été effectuée avec succès.
